# DEMANDE DE BREVET EUROPEEN

(11) **EP 0 728 416 A2**
(43) Date de publication de la demande: **28.08.1996**
(21) Numéro de dépôt: 96420057.0
(22) Date de dépôt: 20.02.1996
(51) Int. Cl.: A23C 9/154

(54) **Préparation liquide pour un produit alimentaire à base de céréales**

(30) Priorité: 21.02.1995 FR 9502275
(71) Demandeur: COMPAGNIE EUROPEENNE DE DIFFUSION DE PRODUITS LACTES - CEDILAC SA, 69286 Lyon Cedex 02 (FR)
(72) Inventeur: Duret, Patrick, 77400 Saint Thibault des Vignes (FR); Demetri, Nicolas, 92140 Clamart (FR)
(74) Mandataire: Vuillermoz, Bruno

(57) **Abrégé**

Cette préparation liquide pour un produit alimentaire à base de céréales se compose d'une base laitière non fermentée, additionnée d'un agent épaississant dont la concentration est comprise entre 0,03 et 5% en masse du produit final. L'agent épaississant est choisi dans le groupe comprenant les amidons, les carragheenanes, la caroube, la guar, les gélatines, les xanthanes, la carboxyméthylcellulose et l'hydroxypropylméthylcellulose.

## Description

L'invention concerne une nouvelle préparation liquide destinée à la consommation d'un produit alimentaire à base de céréales.

La consommation de céréales, notamment au petit déjeuner, est particulièrement fréquente, notamment dans les pays anglo-saxons, et tend à se développer de plus en plus, y compris en France. Ces céréales se présentent le plus souvent sous forme partiellement ou totalement déshydratés, et ce, afin d'en augmenter leur durée de conservation. Par ailleurs, cette déshydratation confère aux céréales un caractère craquant ou croustillant, tout particulièrment recherché et apprécié par les consommateurs, ainsi que l'ont par ailleurs révélé de nombreuses enquêtes.

Généralement, ces céréales sont consommées avec adjonction de lait, de telle sorte à apporter au caractère nutritionnel des céréales un élément désaltérant. Cependant, de par le caractère mouillant du lait, c'est à dire de par la propension de l'eau qu'il contient à s'absorber dans les grains, pétales ou éléments unitaires constitutifs des céréales, compte tenu de leur caractère particulièrement hydrophile, lesdits céréales perdent quasi-immédiatement leur caractère craquant ou croustillant, dès lors que le lait a été versé.

L'objet de l'invention vise ainsi une préparation laitière, destinée à préserver au moins partiellement ce caractère craquant et croustillant des céréales pendant une durée suffisante, correspondant au moins à la durée nécessaire à la consommation desdites céréales, et ce, en retardant le transfert de l'eau contenue dans le lait entre la base laitière et les céréales.

Par ailleurs, elle vise également à améliorer le goût résultant du mélange lait-céréales, sans pour autant dénaturer les propriétés gustatives ou organoleptiques propres aux céréales.

Cette préparation liquide pour un produit alimentaire à base de céréales se caractérise en ce qu'elle se compose d'une base laitière non fermentée, additionnée d'un ou plusieurs agents épaississants dont la concentration est comprise entre 0,03 et 5 % en masse du produit final.

Selon une caractéristique avantageuse de l'invention, l'agent épaississant est choisi dans le groupe comprenant les amidons, les carragheenanes, la caroube, la guar, les gélatines, les xanthanes, la carboxyméthylcellulose et l'hydroxypropylméthylcellulose, seuls ou en mélange.

On s'est en effet rendu compte, qu'avec la plupart des agents épaississants ainsi décrits, si leur concentration est inférieure à 0,03% en masse du produit final, l'effet épaississant est insuffisant pour retarder le transfert d'eau entre la base laitière et les céréales, de sorte que l'on retrouve les inconvénients liés à l'utilisation du lait seul.

Par ailleurs, si cette concentratrion excède 5% en masse du produit final, on obtient un produit trop visqueux, altérant le caractère désaltérant recherché de la base laitière.

Lorsque l'amidon est utilisé comme agent épaississant seul, sa concentration en masse est comprise entre 2 et 4 % de la masse du produit final. L'adjonction de cet amidon augmente la viscosité de la base laitière et partant, retarde le transfert d'eau entre ladite base laitière et les céréales. En d'autres termes, il diminue le caractère mouillant du lait et ce, pendant une durée suffisante pour conserver aux céréales leur caractère croustillant pendant leur consommation.

Cet amidon peut être utilisé seul ou en combinaison avec d'autres agents épaississants, tels que cités précédemment.

Ainsi, on ne pouvait pas imaginer que de par l'utilisation de ces agents épaississants bien connus en soi, utilisés selon les conditions précisées précédemment, on pouvait ainsi préparer une préparation liquide, éventuellement de longue conservation, prête à l'emploi, et qui, mélangée avec des céréales, leur conservait leur caractère croustillant et croquant sans pour autant en altérer le goût et, tout en préservant le caractère désaltérant de ladite base laitière.

La base laitière est constituée par du lait dont le taux de matières grasses peut être standardisé de zéro à 50 g/l.

Avantageusement, on rajoute à la préparation décrite précédemment un agent sucrant, à raison de 2 % en masse du produit final.

Toujours dans le souci de promouvoir le goût et l'appétence de cette préparation liquide en combinaison avec des céréales, ladite préparation comprend également de la vanille, à raison de 0,02 à 1 % en masse du produit final.

Ainsi que déjà dit précédemment, cette préparation liquide peut également subir un traitement longue conservation, tel que par exemple un traitement dit ultra-haute température (UHT). Ce procédé étant bien connu, il est inutile de le décrire ici plus en détail. Pour l'essentiel, ce procédé, largement industrialisé, consiste :
- à préchauffer la préparation liquide, par exemple à 65 - 75 °C ;
- à homogénéiser cette préparation liquide préchauffée en la soumettant à de fortes pressions (entre 50 et 200 bars, soit entre 50.10⁵ et 200.10⁵ Pascals) ;
- puis à stériliser par un choc thermique à environ 138 - 145 °C pendant deux à quatorze secondes la préparation ainsi obtenue;
- puis à refroidir la préparation à envrion 25 °C ;
- et enfin, soit à conditionner sous forme aseptique la préparation liquide ainsi refroidie dans un emballage aseptique, soit à effectuer un conditionnement non aseptique de ladite préparation dans un emballage également non aseptique, suivi d'un séjour en autoclave de l'ensemble emballage + préparation liquide en tour de stérilisation.

La manière dont l'invention peut être réalisée et les avantages qui en découlent ressortiront mieux des exemples de réalisation qui suivent.

### EXEMPLE 1

Dans cet exemple, la base laitière est constituée de 89,57% en poids de lait écrémé et de 4,98% en poids de crème à 30% de matières grasses.

Par ailleurs, on rajoute comme agents épaississants :
- 1% en poids d'amidon modifié;
- 0,150% en poids de xanthane.

Enfin, sont également additionnés à la préparation liquide ainsi obtenue :
- 2% en poids de sucre cristallisé ;
- 2% en poids de poudre de lait écrémé ;
- et 0,3% en poids de vanille.

### EXEMPLE 2

La base laitière est constituée de 88,57% en poids de lait écrémé et de 4,98% en poids de crème. Les agents épaississants sont constitués de:
- 3% en poids d'amidon modifié;
- 0,15% d'un mélange xanthanes/carragheenanes.

En outre, est ajouté au mélange ainsi obtenu 1% en poids d'émulsifiant, 2% en poids de sucre et 0,3% en poids de vanille.

### EXEMPLE 3

La base laitière est constituée de 90,09% en poids de lait écrémé et de 5,01% en poids de crème. Les agents épaississants sont constitutés de 0,3% en poids de carragheenanes et de 0,3% en poids de caroube.

Le mélange ainsi obtenu est additioné de 2% en poids de poudre de lait écrémé, de 2% en poids de sucre cristallisé, et de 0,3% en poids de vanille.

Les trois préparations ainsi obtenues présentent toutes la caractéristique fonctionnelle de retarder la mouillabilité des céréales auxquelles elles sont mélangées, ainsi qu'un certain effet en bouche, notamment un effet nappant, favorisant la consommation desdites céréales.

## Revendications

1. Préparation liquide pour un produit alimentaire à base de céréales ***caractérisée*** en ce qu'elle se compose d'une base laitière non fermentée, additionnée d'un agent épaississant dont la concentration est comprise entre 0,03 et 5 % en masse du produit final.

2. Préparation liquide pour un produit alimentaire à base de céréales selon la revendication 1, ***caractérisée*** en ce que l'agent épaississant est choisi dans le groupe comprenant les amidons, les carragheenanes, la caroube, la guar, les gélatines, les xanthanes, la carboxyméthylcellulose et l'hydroxypropylméthylcellulose, seuls ou en mélange.

3. Préparation liquide pour un produit alimentaire à base de céréales selon la revendication 1, ***caractérisée*** en ce que l'agent épaississant est constitué par de l'amidon seul, dont la concentration en masse est comprise entre 2 et 4 % de la masse du produit final

4. Préparation liquide pour un produit alimentaire à base de céréales selon l'une des revendications 1 à 3, ***caractérisée*** en ce que la base laitière est constituée par du lait, dont le taux de matières grasses peut être standardisé de zéro à 50 g/l.

5. Préparation liquide pour un produit alimentaire à base de céréales selon l'une des revendications 1 à 4, ***caractérisée*** en ce que l'on rajoute en outre à la base laitière un agent sucrant, à raison de 2 % en masse du produit final.

6. Préparation liquide pour un produit alimentaire à base de céréales selon l'une des revendications 1 à 5, ***caractérisée*** en ce qu'elle comprend également de la vanille, à raison de 0,02 à 1 % en masse du produit final.

7. Préparation liquide pour un produit alimentaire à base de céréales selon l'une des revendications 1 à 6, ***caractérisée*** en ce qu'elle subit après réalisation un traitement longue conservation, et notamment selon le procédé UHT.
